# EUROPÄISCHE PATENTANMELDUNG

(11) **EP 2 444 702 A1**
(43) Veröffentlichungstag der Anmeldung: **25.04.2012**
(21) Anmeldenummer: 10188010.2
(22) Anmeldetag: 19.10.2010
(51) Int. Cl.: F16K 3/02, F16K 11/065

(54) **Schieberventil mit einer feststehend angeordneten und einer verschiebbaren Scheibe zum Absperren und/oder Regeln eines Fluids**

(71) Anmelder: SIEMENS AKTIENGESELLSCHAFT, 80333 München (DE)
(72) Erfinder: Lenzi, Arno, 8003, Zürich (CH); Eggert, Dominik, 8050, Zürich (CH)

(57) **Zusammenfassung**

Ein Schieberventil weist eine feststehend zwischen zwei Ventilkammern (A, C) angeordnete Scheibe (1), und eine auf der feststehenden Scheibe (1) dicht anliegend und verschiebbar angeordnete weitere Scheibe (10) auf. Die beiden Scheiben (1, 10) sind vorzugsweise aus Technischer Keramik. Die feststehend angeordnete Scheibe (1) weist auf einer Hauptoberfläche (7) eine Zone (8) auf, die ausserhalb der Ventilkammern (A, C) liegt. In der besagten Zone (8) ist eine durchgehende, durch die verschiebbare Scheibe (10) verschiebungsunabhängig abgedichtete Öffnung (9) ausgebildet. Die verschiebbare Scheibe (10) ist über einen durch die Öffnung (9) führenden Stössel (11) betätigbar, wobei der Volumenstrom eines Fluids durch die veränderbare gegenseitige Lage von in den beiden Scheiben (1, 10) ausgebildeten Durchgangsöffnungen (12, 13) steuer- oder regelbar ist. Dadurch, dass der Stössel (11) durch die feststehende Scheibe (1) geführt ist, wird ein einfacher und damit kostengünstiges Schieberventil mit nur zwei Scheiben (1, 10) realisierbar.

## Beschreibung

### Technisches Gebiet der Erfindung

Die Erfindung bezieht sich auf ein Schieberventil der im Oberbegriff des Anspruchs 1 genannten Art.

Ein derartiges Absperr- und/oder Regelorgan eignet sich beispielsweise als Drossel-, Absperr-, Regel-, Misch- oder Verteilventil in Rohrleitungen für flüssige oder gasförmige Medien, zum Steuern und/oder Regeln der Durchflussmenge, des Drucks oder der Wärmemenge. Derartige, als Schieber oder Schieberventile bezeichnete Absperr- und/oder Regelorgane sind beispielsweise in der Heizungs-, Lüftungs- und Klimatechnik in Heiz- und Kühlmittelkreisen vielfältig einsetzbar.

### Stand der Technik

Aus EP 0 052 523 A1 ist ein Schieberventil mit keramischen Scheiben bekannt, bei dem zwischen zwei feststehenden Dichtscheiben eine dritte Scheibe zum Steuern eines Durchflusses verschiebbar angeordnet ist. In den drei Scheiben sind Durchgangsöffnungen derart ausgebildet, dass durch ein Verschieben der dritten Scheibe der wirksame Querschnitt eines Durchlasskanals für ein Fluid veränderbar ist.

Ein Schieberventil mit zwei gegeneinander verschiebbaren Schieberplatten ist beispielsweise aus DE 10 2008 017 099 A bekannt.

Es ist auch bekannt (Patent Abstracts Of Japan, 09269073 A), in einem Ventil eine feststehende keramische Scheibe mit mehreren Durchgangslöchern dicht zusammen mit einer weiteren, drehbaren Scheibe anzuordnen, in der eine Einbuchtung ausgebildet ist. Durch eine entsprechende Drehung ist ein Medium mittels der Einbuchtung von einem Durchgangsloch in ein weiteres Durchgangsloch umlenkbar.

Bekannte Schieberventile erfordern hohen Aufwand zum Abdichten beweglicher Scheiben oder sie bewirken insbesondere im offenen Zustand des Ventils einen hohen Strömungsdruckverlust in einem Fluid, der durch ein Umlenken des Fluids mitverursacht wird.

### Technische Aufgabe der Erfindung und Lösung

Der Erfindung liegt die Aufgabe zugrunde, ein zuverlässiges und kostengünstiges Schieberventil zu schaffen, das zum Absperren, aber auch zum kontinuierlichen Verändern eines Volumenstroms geeignet ist, das relativ wenig Aufwand zum Abdichten erfordert und das im offenen Zustand in einem Fluid einen relativ niedrigen Strömungsdruckverlust verursacht.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung mit Hilfe von Zeichnungen näher erläutert.

### Angaben zu den Zeichnungen

Es zeigen:
Fig. 1: Eine prinzipielle Darstellung eines Ventils gemäss Erfindung, mit einem Einlass- und einem Auslasskanal in offenem Zustand,
Fig. 2: eine prinzipielle Darstellung des Ventils in geschlossenem Zustand,
Fig. 3: eine prinzipielle Darstellung einer Ausführungsvariante eines gemäss der Erfindung aufgebauten Ventils, mit zwei Einlasskanälen und einem Auslasskanal, in einer ersten Ventilstellung,
Fig. 4: ein prinzipielle Darstellung der in der Fig. 3 dargestellten Ausführungsvariante des Ventils in einer zweiten Ventilstellung,
Fig. 5: eine prinzipielle Darstellung einer weiteren Ausführungsvariante der Erfindung in einer ersten Ventilstellung,
Fig. 6: eine prinzipielle Darstellung der in der Fig. 5 gezeigten Ausführungsvariante in einer zweiten Ventilstellung, und
Fig. 7: eine prinzipielle Darstellung einer Variante mit Scheiben und Durchgangsöffnungen eines gemäss Erfindung aufgebauten Ventils in einem Aufriss 7a und einem Seitenriss 7b als Schnitt S.

### Detaillierte Beschreibung der Erfindung

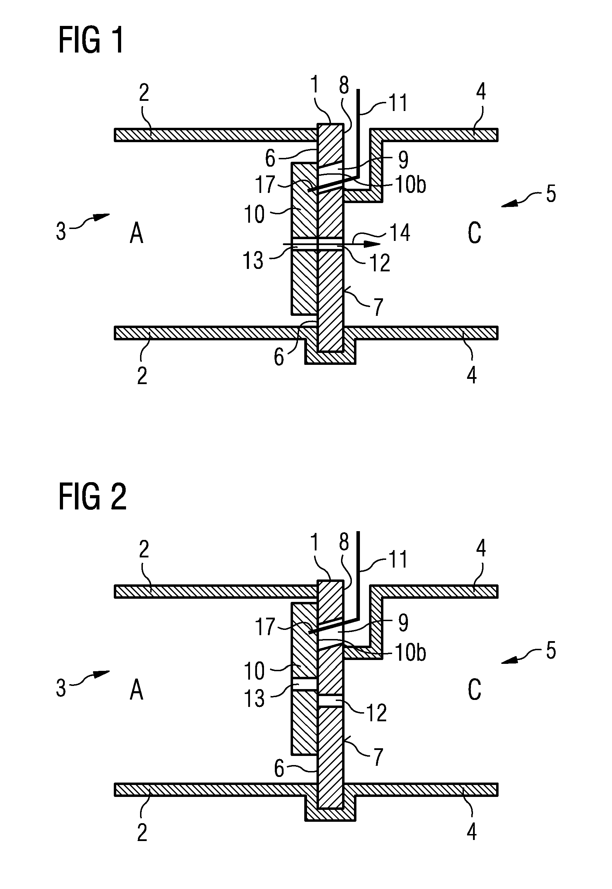

In der Fig. 1 wie auch in der Fig. 2 ist mit A eine erste Ventilkammer und mit C eine zweite Ventilkammer eines Schieberventils bezeichnet. Die beiden Ventilkammern A und C sind durch eine feststehend angeordnete erste Scheibe 1 voneinander getrennt. Die erste Ventilkammer A ist weiter durch einen ersten, hier rohrartig dargestellten Kanal 2 abgegrenzt, und weist eine Einlasszone 3 für ein flüssiges oder gasförmiges Medium auf. Die zweite Ventilkammer C ist weiter durch einen zweiten, hier rohrartig dargestellten Kanal 4 abgegrenzt, und weist eine Auslasszone 5 für das flüssige oder gasförmige Medium auf.

Die feststehend zwischen den beiden Kanälen 2 und 4 angeordnete erste Scheibe 1 weist zwei, vorzugsweise ebene und im wesentlichen parallel zueinander liegende Hauptoberflächen 6 und 7 auf, von denen eine erste Hauptoberfläche 6 im Wesentlichen an die erste Ventilkammer A und eine zweite Hauptoberfläche 7 teilweise an die zweite Ventilkammer C grenzt.

Der zweite Kanal 4 ist derart ausgeformt und an die feststehend angeordnete Scheibe 1 geführt, dass die feststehende Scheibe 1 auf der zweiten Hauptoberfläche 7 eine Zone 8 aufweist, die ausserhalb der zweiten Ventilkammer C liegt. In der Zone 8 weist die feststehend angeordnete Scheibe 1 eine durchgehende Öffnung 9 auf. In der ersten Ventilkammer A, dicht an der ersten Hauptoberfläche 6, ist eine verschiebbar gelagerte, weitere Scheibe 10 angeordnet, durch welche die durchgehende Öffnung 9 der feststehenden Scheibe 1 bewegungsunabhängig abgedichtet wird. Die verschiebbar gelagerte Scheibe 10 ist über einen durch die Öffnung 9 führenden Stössel 11 bewegbar. Durch ein Bewegen des Stössels 11 wird also das in Fig. 1 und Fig. 2 dargestellte, die beiden Ventilkammern A und C aufweisende Schieberventil betätigt.

Der Stössel 11 ist mit der verschiebbar gelagerten Scheibe 10 derart mechanisch gekoppelt, dass die Scheibe 10 durch den Stössel 11 zuverlässig bewegbar ist. In einer beispielhaften Ausführungsform ist in der verschiebbar gelagerten Scheibe 10 auf einer gegen das Fluid abgedichteten Hauptoberfläche 10b im Bereich der Öffnung 9 eine Tasche 17 oder ein Sackloch ausgebildet, in die, beziehungsweise in das der Stössel 11 eingreift. Der Stössel 11 ist ausserhalb der Ventilkammern A und C mit einem in der Zeichnung nicht dargestellten Antriebsmechanismus verbunden.

Die feststehend angeordnete Scheibe 1 weist eine erste Durchgangsöffnung 12 auf. Eine zweite Durchgangsöffnung 13 ist in der verschiebbaren Scheibe 10 ausgeführt. Durch entsprechendes Positionieren der verschiebbaren Scheibe 10 und einem damit verbundenen Positionieren der zweiten Durchgangsöffnung 13 bezüglich der ersten Durchgangsöffnung 12, ist die Querschnittsfläche eines - mit einem ersten Pfeil 14 symbolisierten - die beiden Ventilkammern A und C verbindenden oder auch trennenden Durchlasskanals für ein Fluid veränderbar.

Ein niedriger Durchlasswiderstand für das Fluid im Schieberventil ist erreichbar, wenn die beiden Hauptoberflächen 6 und 7 der feststehenden Scheibe 1, und damit beide Scheiben 1 und 10, im Wesentlichen senkrecht zu einem zwischen der Einlasszone 3 und der Auslasszone 5 liegenden Strömungskanal angeordnet sind.

In der Fig. 1 ist der durch die beiden Durchgangsöffnungen 12 und 13 gebildete Durchlasskanal 14 in einem offenem Zustand dargestellt, so dass ein Fluid beispielsweise aus der ersten Ventilkammern A in die zweite Ventilkammer C fliessen könnte.

In der Fig. 2 sind die beiden Durchgangsöffnungen 12 und 13 durch eine entsprechende Positionierung der verschiebbaren Scheibe 10 gegeneinander versetzt positioniert, so dass die beiden Ventilkammer A und C voneinander getrennt, also gegeneinander abgedichtet sind.

Die ausserhalb der beiden Ventilkammern A und C liegende Zone 8, und auch der durch die - mittels der verschiebbaren Scheibe 10 - abgedichtete Öffnung 9 führende Stössel 11, kommen mit dem durch das Ventil steuer- oder regelbaren Fluid nicht in Kontakt.

Die beiden Scheiben 1 und 10 ermöglichen also die Funktion, den Durchfluss des Fluids durch das Schieberventil zu steuern. Ausserdem ermöglichen die beiden Scheiben 1 und 10 bei geeigneter Werkstoffauswahl die Aufgabe, eine ausserhalb der Ventilkammern A und C erzeugte Stellbewegung auf die verschiebbare Scheibe 10 zu übertragen, ohne dass dadurch Fluid aus der Ventilkammern A oder C in die Umgebung gelangt.

Die beiden Scheiben 1 und 10 werden mit Vorteil aus einem Keramikwerkstoff hergestellt. Derartige Werkstoffe sind auch unter dem Begriff "Technische Keramik" bekannt. Für die beiden Scheiben 1 und 10 geeignete Werkstoffe sind beispielhaft Aluminiumoxid (Al₂O₃) oder Siliciumkarbid (SiC). Grundsätzlich besteht die Möglichkeit, beide Scheiben 1 und 10 aus dem gleichen Keramikwerkstoff anzufertigen, oder aber, die feststehend angeordnete Scheibe 1 aus einem ersten Keramikwerkstoff und die verschiebbare Scheibe 10 aus einem zweiten, vom ersten Keramikwerkstoff verschiedenen Keramikwerkstoff anzufertigen.

Die beiden Scheiben 1 und 10 aus Keramikwerkstoff sind bei entsprechender Beschaffenheit der Reibfläche auch bei Stellbewegungen absolut selbst-dichtend.

Es versteht sich von selbst, dass Form, Anzahl und Querschnittsmasse der beiden Durchgangsöffnungen 12 und 13 in weiten Grenzen auf eine geforderte Ventil-Charakteristik anpassbar sind, dabei kann eine vom Stössel 11 auslösbare Stellbewegung der verschiebbaren Scheibe 10 gegenüber der feststehenden Scheibe 1 grundsätzlich eine geradlinige Bewegung, eine Drehbewegung oder eine Kombination aus geradlinigen Bewegungen und Drehbewegungen sein.

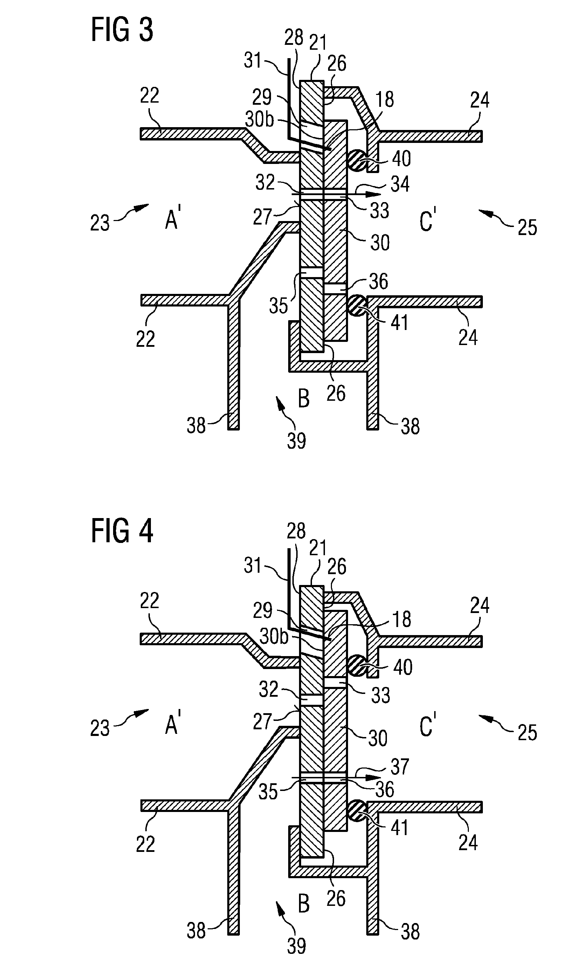

In der Fig. 3 wie auch in der Fig. 4 ist mit A' eine dritte Ventilkammer, mit B eine vierte Ventilkammer und mit C' eine fünfte Ventilkammer bezeichnet. Die fünfte Ventilkammern C' ist von der dritten Ventilkammer A' und der vierten Ventilkammer B durch eine zweite feststehend angeordnete Scheibe 21 getrennt. Die dritte Ventilkammer A' ist weiter durch einen ersten, hier rohrartig dargestellten Kanal 22 abgegrenzt, und weist eine Einlasszone 23 für ein flüssiges oder gasförmiges Medium auf. Die fünfte Ventilkammer C' ist weiter durch einen zweiten, hier rohrartig dargestellten Kanal 24 abgegrenzt, und weist eine Auslasszone 25 für das flüssige oder gasförmige Medium auf. Die vierte Ventilkammer B ist weiter durch einen dritten, hier rohrartig dargestellten Kanal 38 abgegrenzt, und weist eine weitere Einlasszone 39 für das flüssige oder gasförmige Medium auf.

Die feststehend zwischen dem ersten Kanal 22 und dem zweiten Kanal 24 beziehungsweise zwischen dem dritten Kanal 38 und dem zweiten Kanal 24 angeordnete zweite Scheibe 21 weist zwei, vorzugsweise ebene und im wesentlichen parallel zueinander liegende Hauptoberflächen 26 und 27 auf, von denen eine erste Hauptoberfläche 26 im Wesentlichen an die fünfte Ventilkammer C' und eine zweite Hauptoberfläche 27 teilweise an die dritte Ventilkammer A' und teilweise an die vierte Ventilkammer B grenzt.

Der erste Kanal 22 und der dritte Kanal 38 sind derart ausgeformt und an die feststehend angeordnete zweite Scheibe 21 geführt, dass die feststehende Scheibe 21 auf der zweiten Hauptoberfläche 27 eine Zone 28 aufweist, die ausserhalb der dritten Ventilkammer A' und auch ausserhalb der vierten Ventilkammer B liegt. In der Zone 28 weist die feststehend angeordnete zweite Scheibe 21 eine durchgehende Öffnung 29 auf. In der fünften Ventilkammer C', dicht an der ersten Hauptoberfläche 26, ist eine weitere, verschiebbar gelagerte Scheibe 30 angeordnet, durch welche die durchgehende Öffnung 29 der feststehenden Scheibe 21 bewegungsunabhängig abgedichtet wird. Die verschiebbar gelagerte Scheibe 30 ist über einen durch die Öffnung 29 führenden Stössel 31 bewegbar. Durch ein Bewegen des Stössels 31 wird also das in Fig. 3 und Fig. 4 dargestellte, die drei Ventilkammern A', B und C' aufweisende Schieberventil betätigt.

Der Stössel 31 ist mit der verschiebbar gelagerten Scheibe 30 derart mechanisch gekoppelt, dass die Scheibe 30 durch den Stössel 31 zuverlässig bewegbar ist. In einer beispielhaften Ausführungsform ist in der verschiebbar gelagerten Scheibe 30 auf einer gegen das Fluid abgedichteten Hauptoberfläche 30b im Bereich der Öffnung 29 eine Tasche 18 oder ein Sackloch ausgebildet, in die, beziehungsweise in das der Stössel 31 eingreift. Der Stössel 31 ist ausserhalb der Ventilkammern A' und C' mit einem in der Zeichnung nicht dargestellten Antriebsmechanismus verbunden.

Die zweite feststehend angeordnete Scheibe 21 weist im Bereich der dritten Ventilkammer C' eine erste Durchgangsöffnung 32 auf. Eine zweite Durchgangsöffnung 33 ist in der verschiebbaren Scheibe 30 ausgeführt. Durch entsprechendes Positionieren der verschiebbaren Scheibe 30 und dem damit verbundenen Positionieren der zweiten Durchgangsöffnung 33 bezüglich der ersten Durchgangsöffnung 32, ist die Querschnittsfläche eines - mit einem zweiten Pfeil 34 symbolisierten - die dritte Ventilkammer A' und die fünfte Ventilkammer C' verbindenden oder auch trennenden Durchlasskanals für ein Fluid veränderbar.

Die zweite feststehend angeordnete Scheibe 21 weist ausserdem eine dritte Durchgangsöffnung 35 im Bereich der vierten Ventilkammer B auf. Zu dem ist eine vierte Durchgangöffnung 36 in der verschiebbaren Scheibe 30 ausgeführt. Durch entsprechendes Positionieren der verschiebbaren Scheibe 30 und dem damit verbundenen Positionieren der vierten Durchgangsöffnung 36 bezüglich der dritten Durchgangsöffnung 35, ist die Querschnittsfläche eines - mit einem dritten Pfeil 37 (Fig. 4) symbolisierten - die vierte Ventilkammer B und die fünfte Ventilkammer C' verbindenden oder auch trennenden Durchlasskanals für ein Fluid veränderbar.

In der Fig. 3 ist der durch die beiden Durchgangsöffnungen 32 und 33 gebildete Durchlasskanal 34 in einem offenem Zustand dargestellt, so dass ein Fluid beispielsweise aus der dritten Ventilkammer A' in die fünfte Ventilkammer C' fliessen könnte. Die beiden Durchgangsöffnungen 35 und 36 hingegen sind durch die dargestellte Positionierung der verschiebbaren Scheibe 30 gegeneinander versetzt positioniert, so dass die vierte Ventilkammer B und die fünfte Ventilkammer C' voneinander getrennt und gegeneinander abgedichtet sind.

In der Fig. 4 sind die beiden Durchgangsöffnungen 32 und 33 durch eine entsprechende Positionierung der verschiebbaren Scheibe 30 gegeneinander versetzt positioniert, so dass die dritte Ventilkammer A' und die fünfte Ventilkammer C' voneinander getrennt und gegeneinander abgedichtet sind. Der durch die beiden Durchgangsöffnungen 35 und 36 gebildete Durchlasskanal 37 hingegen ist durch die Positionierung der verschiebbaren Scheibe 30 in einem offenem Zustand, so dass ein Fluid beispielsweise aus der vierten Ventilkammer B in die fünfte Ventilkammer C' fliessen könnte.

Die ausserhalb der drei Ventilkammern A', B und C' liegende Zone 28, und auch der durch die - mittels der verschiebbaren Scheibe 30 - abgedichtete Öffnung 29 führende Stössel 31, kommen mit dem durch das Ventil steuer- oder regelbaren Fluid nicht in Kontakt.

In einer vorteilhaften Ausführung des Schieberventils sind die beiden Scheiben 1 oder 10 (Fig. 1 und Fig. 2) beziehungsweise 21 oder 30 (Fig. 3 und Fig. 4) derart angeordnet und gelagert, dass, mindestens dann, wenn das Schieberventil in einem Fluid-Kreis eingesetzt ist, zwischen den beiden Scheiben 1 und 10 beziehungsweise 21 und 30 eine resultierende Kraft derart wirkt, dass die beiden Scheiben 1 und 10 beziehungsweise 21 und 30 gegeneinander gepresst werden. Durch die besagte Kraft kann sichergestellt werden, dass die beiden Scheiben 1 und 10 beziehungsweise 21 und 30 auch bei einem Betätigen des Schieberventils dicht aufeinanderliegen.

In dem in Fig. 1 und Fig. 2 dargestellten Beispiel des Schieberventils ist die besagte Kraft mindestens teilweise durch eine zwischen den beiden Ventilkammern A und C wirkende Druckdifferenz generierbar, die sich bei einem von der Strömungsrichtung des Fluids abhängigen Einbau des Schieberventils im Fluid-Kreis dann ergibt, wenn das Fluid in die erste Ventilkammer A eingespeist und aus der zweiten Ventilkammer C abgeführt wird. Die verschiebbar angeordnete Scheibe 10 wird durch die zwischen den beiden Ventilkammern A und C wirkende Druckdifferenz auf die feststehend angeordnete Scheibe 1 gepresst.

In dem in Fig. 3 und Fig. 4 dargestellten Beispiel des Schieberventils wird ein Fluid in die dritte Ventilkammer A' und in die vierte Ventilkammer B eingespeist und über die fünfte Ventilkammer C' abgeführt. Damit ergibt sich im Fluid eine Druckdifferenz, durch welche die feststehend angeordnete Scheibe 21 auf die verschiebbar angeordnete Scheibe 30 gepresst wird. Eine vorteilhafte Vorrichtung zur Lagerung der beiden Scheiben 21 und 30 umfasst beispielhaft Lagerelemente 40 und 41, durch welche die beiden Scheiben 21 und 30 am zweiten Kanal 24 abgestützt sind. In einer weiteren Ausführungsvariante der Vorrichtung wird die verschiebbar angeordnete Scheibe 30 durch eine in der Zeichnung nicht dargestellte Lagervorrichtung an die feststehende Scheibe 21 gebunden.

Ein Verändern von Anzahl, Form und Anordnung von Ventilkammern des hier vorgeschlagenen, zwei aufeinanderliegende Scheiben oder Platten aufweisenden Schieberventils, ermöglicht Ausführungsvarianten zum Mischen oder Verteilen von Fluiden.

Ausführungsvarianten des Schieberventils, mit der zwischen wenigstens zwei Ventilkammern feststehend angeordneten Scheibe 1 oder 21, mit der auf der feststehenden Scheibe 1 oder 21 dicht anliegend und bezüglich der festen Scheibe 1 oder 21 verschiebbar angeordneten Scheibe 10 oder 30, sind grundsätzlich als Absperr- und/oder Regelorgane für unterschiedliche Anwendungen konzipierbar. Gemäss der vorliegenden Erfindung weist die feststehend angeordnete Scheibe 1 oder 21 auf einer der beiden Hauptoberflächen 7 oder 27 eine Zone 8 oder 28 auf, die ausserhalb der Ventilkammern liegt, wobei die feststehend angeordnete Scheibe 1 oder 21 in der besagten Zone 8 oder 28 eine durchgehende, durch die verschiebbare Scheibe 10 oder 30 verschiebungsunabhängig abgedichtete Öffnung 9 oder 29 aufweist, und, wobei die verschiebbare Scheibe 10 oder 30 über einen durch die Öffnung 9 oder 29 der feststehenden Scheibe 1 oder 21 führender Stössel 11 oder 31 verschiebbar ist.

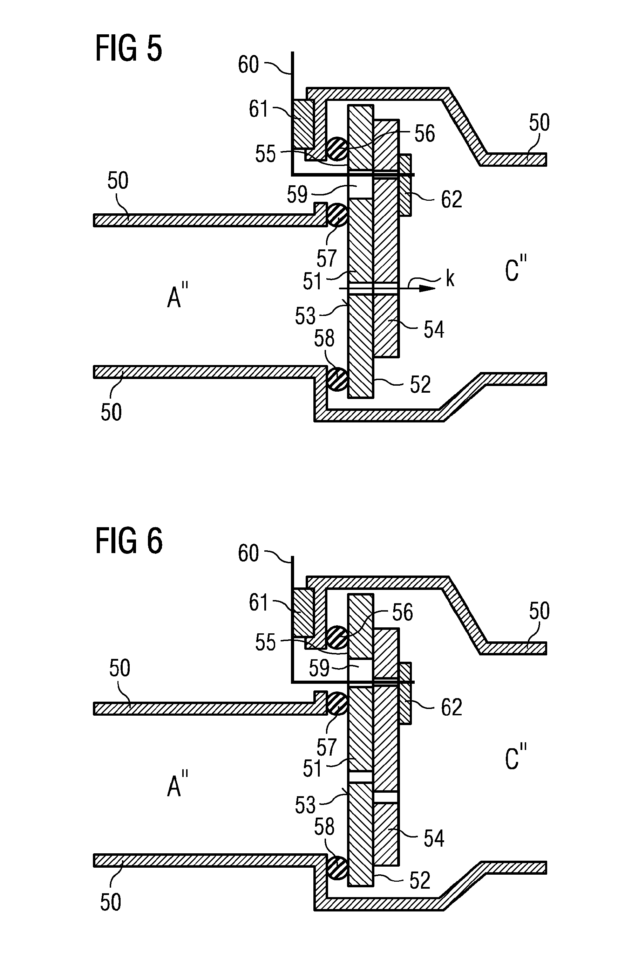

In der Fig. 5 wie auch in der Fig. 6 weist ein Ventilgehäuse 50 eine erste Ventilkammer A" und eine zweite Ventilkammer C" auf. Die beiden Ventilkammern A" und C" sind durch eine feststehend angeordnete Scheibe 51 voneinander getrennt. Die feststehend angeordnete Scheibe 51 weist zwei, vorzugsweise ebene und im wesentlichen parallel zueinander liegende Hauptoberflächen 52 und 53 auf, von denen eine erste Hauptoberfläche 52 an die zweite Ventilkammer C" und eine zweite Hauptoberfläche 53 teilweise an die erste Ventilkammer A" grenzt und teilweise ausserhalb der beiden Ventilkammern A" und C" liegt. In der zweiten Ventilkammer C", dicht an der ersten Hauptoberfläche 52, ist eine weitere, verschiebbar gelagerte Scheibe 54 angeordnet.

Das Ventilgehäuse 50 ist derart ausgeformt, dass die feststehend angeordnete Scheibe 51 auf der zweiten Hauptoberfläche 53 eine Zone 55 aufweist, die ausserhalb der beiden Ventilkammern A" und C" liegt. In der Zone 55 weist die feststehend angeordnete Scheibe 51 eine durchgehende Öffnung 59 auf, welche durch die verschiebbar gelagerte Scheibe 54 gegen die zweite Ventilkammer C" hin abgedichtet wird. Zwischen dem Ventilgehäuse 50 und der zweiten Hauptoberfläche 53 der feststehend angeordneten Scheibe 53 sind Dichtungen 56, 57 und 58 derart angeordnet, dass die Zone 55 gegen die beiden Ventilkammern A" und C" abgedichtet ist.

Die verschiebbar gelagerte Scheibe 54 ist über einen durch die Öffnung 59 führenden Stössel 60 bewegbar. Durch ein Bewegen des Stössels 60 wird also das in Fig. 5 und Fig. 6 dargestellte, die beiden Ventilkammern A" und C" aufweisende Schieberventil betätigt und kann beispielsweise von einem in der Fig. 5 dargestellten Zustand mit zwischen den beiden Ventilkammern A" und B" offenem Durchflusskanal k in einen in der Fig. 6 dargestellten Zustand überführt werden, in dem die beiden Ventilkammern A" und B" gegeneinander vollständig abgedichtet sind.

Der Stössel 60 ist mit der verschiebbar gelagerten Scheibe 54 derart mechanisch gekoppelt, dass die Scheibe 54 durch den Stössel 60 zuverlässig bewegbar ist. In der dargestellten beispielhaften Ausführungsvariante ist der Stössel 60 vorteilhafterweise über ein Gleitelement 61 am Ventilgehäuse 50 abgestützt und mittels eines Befestigungsmittels 62 an der verschiebbaren Scheibe 54 befestigt. Dabei ist der Stössel 60 derart an der verschiebbaren Scheibe 54 befestigt, dass die Öffnung 59 von der zweiten Ventilkammer C" dicht abgeschlossen ist. In Betriebszuständen, in denen der Druck eines Fluids in der ersten Ventilkammer A" grösser als der Druck in der zweiten Ventilkammer C" ist, kann eine aus der Druckdifferenz resultierende Kraft auf die Scheiben 51 und 54 mindestens teilweise über das Befestigungsmittel 62, den Stössel 60 und das Gleitelement 61 auf das Ventilgehäuse 50 abgeleitet werden.

Wie bereits im Zusammenhang mit den Figuren 1 bis 6 dargestellt, ist bei einem Schieberventil der Durchfluss eines Fluids zwischen zwei Ventilkammern durch ein Verändern eines wirksamen Querschnitts eines zwischen den Ventilkammern ausgebildeten Durchlasskanals steuerbar. Der wirksame Querschnitt des Durchlasskanals wird beim Schieberventil durch entsprechendes Positionieren einer in einer verschiebbar angeordneten Scheibe ausgebildeten Durchgangsöffnung bezüglich einer weiteren, in einer feststehend positionierten Scheibe ausgebildeten Durchgangsöffnung. Bei Bedarf ist die Durchgangsöffnung 12, 13, 32 oder 34 in mehrere Einzelöffnungen aufgeteilt. Im weiteren kann die verschiebbar angeordnete Scheibe 10, 30 oder 54 bei Bedarf in mehrere Einzelplatten aufgeteilt werden, die von einem Stössel gemeinsam verschiebbar sind.

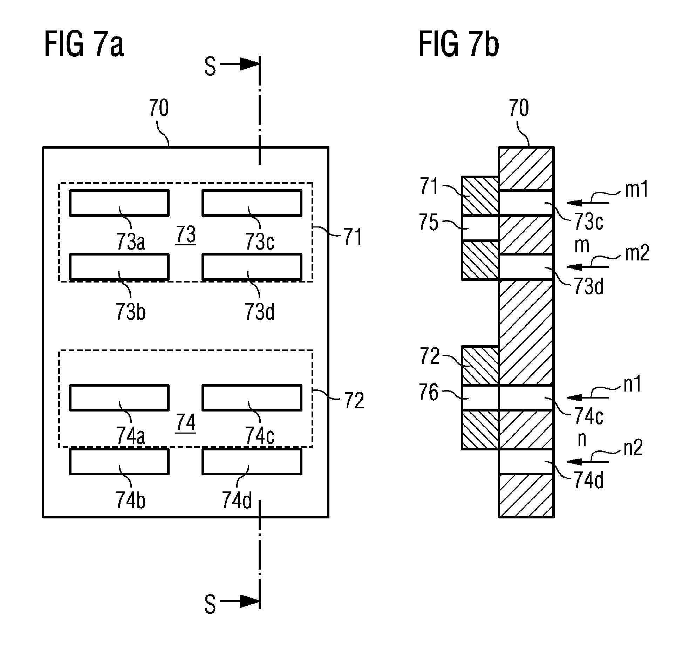

In Fig. 7a und Fig. 7b bezeichnet 70 eine feststehend angeordnete Scheibe eines Schieberventils. Eine verschiebbar angeordnete Scheibe umfasst eine erste Einzelplatte 71 und eine zweite Einzelplatte 72, die von einem in Fig. 7a und Fig. 7b nicht dargestellten Stössel gemeinsam verschiebbar sind. In der feststehend angeordneten Scheibe 70 sind eine erste Durchgangsöffnung 73 und eine zweite Durchgangsöffnung 74 ausgebildet. Die erste Durchgangsöffnung 73 ist in vier Teilöffnungen 73a, 73b, 73c und 73d aufgeteilt. Die zweite Durchgangsöffnung 74 umfasst vier Teilöffnungen 74a, 74b, 74c und 74d. Die erste Einzelplatte 71 weist eine dritte Durchgangsöffnung 75 auf, während an der zweiten Einzelplatte 72 eine vierte Durchgangsöffnung 76 ausgebildet ist. Die dritte Durchgangsöffnung 75 und auch die vierte Durchgangsöffnung 76 umfassen beispielhaft je zwei Teilöffnungen.

Im dargestellten Zustand weist das Schieberventil einen offenen Kanal n und einen geschlossen Kanal m auf, wobei der offene Kanal n entsprechend den vier Durchgangsöffnungen 74a, 74b, 74c und 74d vierTeilkanäle n1, n2, n3 und n4 umfasst. Durch synchrones Verschieben der beiden Einzelplatten 71 und 72 ist sind Zustände erreichbar, in denen beide Kanäle m und n teilweise offen. Die beiden Einzelplatten 71 und 72 sind grundsätzlich zwischen zwei Endlagen verschiebbar, in denen jeweils einer der beiden Kanäle m oder n offen, und der andere Kanal n oder m jeweils geschlossen ist. Es versteht sich von selbst, dass Form, Querschnittsmasse und die Anzahl Teilöffnungen der Durchgangsöffnungen in weiten Grenzen auf eine geforderte Ventil-Charakteristik anpassbar sind.

### Bezugszeichen

| | |
|---|---|
| 1 | Scheibe, erste, feststehend |
| 2 | Kanal, erster |
| 3 | Einlasszone |
| 4 | Kanal, zweiter |
| 5 | Auslasszone |
| 6 | Hauptoberfläche, erste |
| 7 | Hauptoberfläche, zweite |
| 8 | Zone |
| 9 | Öffnung |
| 10 | Scheibe, weitere, verschiebbar |
| 10b | Hauptoberfläche, abgedichtet |
| 11 | Stössel |
| 12 | Durchgangsöffnung, erste |
| 13 | Durchgangsöffnung, zweite |
| 14 | Pfeil, erster |
| 17 | Tasche |
| 18 | Tasche |
| 21 | Scheibe, zweite, feststehend |
| 22 | Kanal, erster |
| 23 | Einlasszone, |
| 24 | Kanal, zweiter |
| 25 | Auslasszone |
| 26 | Hauptoberfläche, erste |
| 27 | Hauptoberfläche, zweite |
| 28 | Zone |
| 29 | Öffnung |
| 30 | Scheibe, weitere, verschiebbar |
| 30b | Hauptoberfläche, abgedichtet |
| 31 | Stössel |
| 32 | Durchgangsöffnung, erste |
| 33 | Durchgangsöffnung, zweite |
| 34 | Pfeil, zweiter |
| 35 | Durchgangsöffnung, dritte |
| 36 | Durchgangsöffnung, vierte |
| 37 | Pfeil, dritter |
| 38 | Kanal, dritter |
| 39 | Einlasszone, weitere |
| 40 | Lagerelement, erstes |
| 41 | Lagerelement, zweites |
| 50 | Ventilgehäuse |
| 51 | Scheibe, feststehend |
| 52 | Hauptoberfläche, erste |
| 53 | Hauptoberfläche, zweite |
| 54 | Scheibe, verschiebbar |
| 55 | Zone |
| 56, | 57, 58 Dichtung |
| 59 | Öffnung |
| 60 | Stössel |
| 61 | Gleitelement |
| 62 | Befestigungsmittel |
| 70 | Scheibe, feststehend |
| 71 | Einzelplatte, erste |
| 72 | Einzelplatte, zweite |
| 73 | Durchgangsöffnung, erste |
| 73a, | 73b, 73c, 73d Teilöffnungen |
| 74 | Durchgangsöffnung, zweite |
| 74a, | 74b, 74c, 74d Teilöffnungen |
| 75 | Durchgangsöffnung, dritte |
| 76 | Durchgangsöffnung, vierte |
| | |
| A | Ventilkammer, erste |
| C | Ventilkammer, zweite |
| A' | Ventilkammer, dritte |
| B | Ventilkammer, vierte |
| C' | Ventilkammer, fünfte |
| A" | Ventilkammer, erste |
| C" | Ventilkammer, zweite |

## Patentansprüche

1. Schieberventil mit einer ersten, zwischen wenigstens einer ersten Ventilkammer (A; A'; B) und wenigstens einer zweiten Ventilkammer (C; C') feststehend angeordneten Scheibe (1; 21), und mit einer zweiten, auf der ersten Scheibe (1; 21) dicht anliegend und bezüglich der ersten Scheibe (1; 21) verschiebbar angeordneten Scheibe (10; 30),
wobei die zweite Scheibe (10; 30) aus einer ersten Position in mindestens eine zweite Position verschiebbar ist, und,
wobei die beiden Scheiben mindestens je eine Durchgangsöffnung (12, 13; 32, 33) aufweisen und die beiden Durchgangsöffnungen (12, 13; 32, 33) dann einen gemeinsamen offenen Durchlasskanal (14; 34) bilden, wenn die zweite Scheibe (10; 30) in der ersten Position liegt, und,
wobei die beiden Durchgangsöffnungen (12, 13; 32, 33) dann abgedeckt sind und der Durchlasskanal (14; 34) dadurch geschlossen ist, wenn die zweite Scheibe (10; 30) in der zweiten Position liegt,
**dadurch gekennzeichnet,**
**dass** die feststehend angeordnete Scheibe (1; 21) auf einer Hauptoberfläche (7; 27) eine Zone (8; 28) aufweist, die ausserhalb der Ventilkammern (A; A'; B; C; C') liegt,
**dass** die feststehend angeordnete Scheibe (1; 21) in der besagten Zone (8; 28) eine durchgehende, durch die verschiebbare Scheibe (10; 30) verschiebungsunabhängig abgedichtete Öffnung (9; 29) aufweist, und,
**dass** die verschiebbare Scheibe (10; 30) über einen durch die Öffnung (9; 29) der feststehenden Scheibe (1; 21) führender Stössel (11; 31) verschiebbar ist.

2. Schieberventil nach Anspruch 1, **dadurch gekennzeichnet,**
**dass** die feststehend angeordnete Scheibe (1; 21) und die verschiebbare Scheibe (10; 30) aus einem Keramikwerkstoff gefertigt sind.

3. Schieberventil nach Anspruch 2, **dadurch gekennzeichnet,**
**dass** die feststehend angeordnete Scheibe (1; 21) und die verschiebbare Scheibe (10; 30) aus Aluminiumoxid sind.

4. Schieberventil nach Anspruch 2, **dadurch gekennzeichnet,**
**dass** die feststehend angeordnete Scheibe (1; 21) und die verschiebbare Scheibe (10; 30) aus Siliciumkarbid sind.

5. Schieberventil nach Anspruch 2, **dadurch gekennzeichnet,**
**dass** die feststehend angeordnete Scheibe (1; 21) aus einem ersten Keramikwerkstoff und die verschiebbare Scheibe (10; 30) aus einem zweiten, vom ersten Keramikwerkstoff verschiedenen Keramikwerkstoff ist.

6. Schieberventil nach einem vorangehenden Anspruch, **dadurch gekennzeichnet,**
**dass** in der verschiebbar gelagerten Scheibe (10; 30) an der abgedichteten Hauptoberfläche (10b; 30b) im Bereich der Öffnung (9; 29) ein Sackloch ausgebildet ist, in das der Stössel (11) eingreift.

7. Schieberventil nach einem vorangehenden Anspruch,
**dadurch gekennzeichnet, dass** die beiden Scheiben (1, 10 bzw. 21, 30) derart angeordnet und gelagert sind, dass, mindestens wenn das Schieberventil in einem Fluid-Kreis eingesetzt ist, zwischen den beiden Scheiben (1, 10 bzw. 21, 30) eine resultierende Kraft derart wirkt, dass die beiden Scheiben (1, 10 bzw. 21, 30) gegeneinander gepresst werden.

8. Schieberventil nach einem vorangehenden Anspruch,
**gekennzeichnet durch** ein Lagermittel (40, 41), **durch** welches die verschiebbar angeordnete Scheibe (30) an der Ventilkammer (C') abgestützt ist.

9. Schieberventil nach Anspruch 7, **dadurch gekennzeichnet, dass** die Kraft mindestens teilweise durch eine zwischen zwei Ventilkammern (A, C; A', C'; B, C') wirkende Druckdifferenz im Fluid-Kreis generierbar ist.

10. Schieberventil nach einem der Ansprüche 1 bis 5, **dadurch gekennzeichnet, dass** der Stössel (60) an einem Gehäuseteil (50) abgestützt ist.

11. Schieberventil nach einem vorangehenden Anspruch, **dadurch gekennzeichnet, dass** die Durchgangsöffnung (12; 13; 32; 33; 73; 74) in mehrere Teilöffnungen aufgeteilt ist.

12. Schieberventil nach einem vorangehenden Anspruch, **dadurch gekennzeichnet, dass** die verschiebbar angeordnete Scheibe (10; 30; 54) in mehrere Einzelplatten aufgeteilt ist, die vom Stössel (11; 31; 60) gemeinsam verschiebbar sind.
